# EUROPÄISCHE PATENTANMELDUNG

(11) **EP 1 574 663 A1**
(43) Veröffentlichungstag der Anmeldung: **14.09.2005**
(21) Anmeldenummer: 04005213.6
(22) Anmeldetag: 05.03.2004
(51) Int. Cl.: E21B 7/24, B23B 45/00

(54) **Handgeführtes Elektrowerkzeug**

(71) Anmelder: A & M Electric Tools GmbH, 71364 Winnenden (DE)
(72) Erfinder: Hess, Dr. Achim, 71404 Korb (DE)
(74) Vertreter: Wasmuth, Rolf

(57) **Zusammenfassung**

Die Erfindung betrifft ein handgeführtes Elektrowerkzeug (1) zur Aufnahme eines Bohrwerkzeuges (2). Das Elektrowerkzeug umfaßt einen auf das Bohrwerkzeug (2) wirkenden Schwingungserreger (3). Mindestens eine Eigenschwingungsfrequenz des Bohrwerkzeuges (2) ist auf die Erregerfrequenz des Schwingungserregers (3) abgestimmt. Das Elektrowerkzeug (1) ist insbesondere zum handgeführten Bohren von Löchern in Stein oder steinähnlichen Werkstoffen wie Beton, Mauerwerk oder dgl. vorgesehen.

## Beschreibung

Die Erfindung betrifft ein handgeführtes Elektrowerkzeug, ein Bohrwerkzeug zur Verwendung in einem entsprechenden Elektrowerkzeug sowie eine Verwendung des Elektrowerkzeuges.

Es sind handgeführte Elektrowerkzeuge zur Herstellung von Bohrungen bekannt. Ein Bohrwerkzeug ist dabei an einer drehend antreibbaren Spindel eingespannt. Zum Ausführen einer Bohrung wird das Bohrwerkzeug in Drehung versetzt und gegen das zu bohrende Material geführt. Ein Bohrkopf des Bohrwerkzeuges ist mit Schneiden versehen, die in einer drehenden Schneidbewegung das Material abtragen. Die drehende Kreisbahnbewegung der Schneiden bewirkt eine zylindrische Ausgestaltung der Bohrung mit kreisförmigem Querschnitt.

Für bestimmte Anwendungsfälle kann es erwünscht sein, Bohrungen mit einer von der Zylinderform abweichenden Form auszuführen. Insbesondere zur Befestigung von Dübeln in Bohrungen ist eine Hinterschneidung in der Bohrung erwünscht, die neben einer klemmenden Festlegung auch eine formschlüssige Festlegung des Dübels bewirkt, wodurch dessen Haltekraft gesteigert werden soll.

Zum Ausführen derartiger Bohrungen beispielsweise in Beton, Mauerwerk oder dgl. wird mittels eines Bohrhammers ein zylindrisches Loch vorgebohrt. Ein Schlagwerk des Hammerbohrers wirkt mit dem Bohrwerkzeug derart zusammen, daß axiale Schläge mittels des Bohrwerkzeuges auf den Schneidenbereich übertragen werden. Die entstehende Meißelwirkung führt in Verbindung mit der Drehbewegung des Bohrwerkzeuges zu einem Abtrag des zu bohrenden Materials.

Nachdem die gewünschte Bohrtiefe erreicht ist, wird mit der Bohrmaschine eine kreisförmig schwenkende Bewegung ausgeführt, in dessen Folge das Bohrloch im Bereich des Bohrkopfes aufgeweitet wird. Es entsteht eine sich in Bohrrichtung kegelförmig aufweitende Bohrungsform, deren Aufweitung eine im Querschnitt kreisförmige Hinterschneidung zur formschlüssigen Festlegung des Dübels bildet.

Die erzielbaren Hinterschneidungen sind in ihrer Form nur unpräzise ausführbar. Das Bohrwerkzeug ist dabei hohen dynamischen Biegebelastungen ausgesetzt, die zu erhöhtem Verschleiß oder sogar zu einem Werkzeugbruch führen können. Der Betrieb des Schlag- bzw. Hammerwerkes bewirkt eine unangenehm hohe Geräusch- und Vibrationsbelastung der Umgebung und insbesondere der Bedienperson. Das Antriebsdrehmoment des Bohrers erfordert ein entsprechend hohes Haltemoment durch die Bedienperson. Der drehende Bohrer kann blockieren, was die Ausführung präziser Bohrungen erschwert. Die Form der herstellbaren Bohrungen ist auf eine Zylinder- oder Kegelform mit kreisförmigem Querschnitt beschränkt.

Der Erfindung liegt die Aufgabe zugrunde, ein handgeführtes Elektrowerkzeug zur Ausführung von Bohrungen mit variabler Bohrungsform anzugeben.

Diese Aufgabe wird durch ein handgeführtes Elektrowerkzeug mit den Merkmalen des Anspruchs 1 gelöst.

Der Erfindung liegt des weiteren die Aufgabe zugrunde, ein Bohrwerkzeug zur Ausführung von Bohrungen mit variabler Geometrie anzugeben.

Diese Aufgabe wird durch ein Bohrwerkzeug mit den Merkmalen des Anspruchs 8 gelöst.

Eine weitere Aufgabe der Erfindung liegt darin, Bohrungen in Stein oder steinähnlichen Werkstoffen variabler zu gestalten.

Diese Aufgabe wird durch die Verwendung eines Elektrowerkzeuges mit den Merkmalen des Anspruchs 14 gelöst.

Es wird ein handgeführtes Elektrowerkzeug zur Aufnahme eines Bohrwerkzeuges vorgeschlagen, welches einen auf das Bohrwerkzeug wirkenden Schwingungserreger umfaßt. Das Bohrwerkzeug ist dabei in mindestens einer Eigenschwingungsfrequenz auf die Erregerfrequenz des Schwingungserregers abgestimmt. Die Erregerfrequenz und die Eigenschwingungsfrequenz liegen zweckmäßig oberhalb von 10 KHz und insbesondere im Ultraschallbereich. Im Betrieb des Elektrowerkzeuges sind der Schwingungserreger und das Bohrwerkzeug zumindest näherungsweise in Resonanz. Das zu entfernende bzw. abzutragende Material wird in dieser Resonanzfrequenz schlagend und ggf. unterstützend auch schneidend abgetragen. Das in seiner Eigenschwingungsfrequenz schwingende Bohrwerkzeug führt Schwingungen mit hoher Amplitude und hoher Wirksamkeit aus, wobei zur Erregung dieser Schwingungen infolge der Resonanzwirkung nur geringer Erregeramplituden erforderlich sind. Die hochfrequente Erregung mit geringer Amplitude führt zu einer geringen mechanischen und akustischen Belastung der Umgebung. Das Elektrowerkzeug kann von Hand ruhig geführt werden. Bohrungen mit unterschiedlicher Kontur können feinfühlig und präzise ausgearbeitet werden.

Der Schwingungserreger ist vorteilhaft als Piezoerreger ausgebildet. Die über ein Netzkabel oder einen Akku bereitgestellte elektrische Energie wird mittels des Piezoerregers mit hohem Wirkungsgrad in mechanische Schwingungsenergie umgewandelt. In Verbindung mit den hohen Erregungs- und Eigenfrequenzen können hohe Bohrleistungen mit vergleichsweise geringer Antriebsenergie erzielt werden. Das Elektrowerkzeug kann klein und handlich ausgeführt sein.

In einer zweckmäßigen Weiterbildung weist das Elektrowerkzeug eine Spannvorrichtung zur statisch festen und insbesondere drehfesten Einspannung des Bohrwerkzeuges auf. Die statisch feste Einspannung des Bohrwerkzeuges bewirkt, daß dessen die Bohrung bewirkende Schwingebewegung im wesentlichen ausschließlich eine dynamische Eigenschwingung ist. Die feste Einspannung führt zu einer präzise definierten Eigenschwingfrequenz, die eine Abstimmung der Erregerfrequenz des Schwingungserregers auf das Gesamtsystem vereinfacht. Die drehfeste Einspannung des Bohrwerkzeuges erlaubt insbesondere in Verbindung mit einem unrunden Bohrkopf die Herstellung von Bohrungen mit einem von der Kreisform abweichenden Querschnitt. Nach Erreichen der gewünschten Bohrtiefe kann das Elektrowerkzeug gemeinsam mit dem drehfest eingespannten Bohrwerkzeug gedreht werden, wobei die radial über den Schaft des Bohrwerkzeuges hervorstehenden Teile des Bohrkopfes eine in der Form präzise definierte Hinterschneidung gegenüber der unrunden Kernbohrung erzeugen.

Es ist vorteilhaft im Bereich des Bohrwerkzeuges eine Absaugeinrichtung für Bohrstaub vorgesehen. Das Fehlen einer Bohrmehlabfuhr durch die nach dem Stand der Technik übliche spiralige Bohrmehlnut in Verbindung mit einer Drehbewegung des Bohrers kann durch die Absaugeinrichtung in einfacher Weise kompensiert werden.

In einer zweckmäßigen Ausführung ist im Bereich des Bohrwerkzeuges eine Zuführeinrichtung für eine insbesondere mit abrasiven Bohrhilfsmitteln versehene Bohrflüssigkeit vorgesehen. Es können Bohrwerkzeuge mit vielfältig ausgeführten Bohrköpfen auch ohne Schneide eingesetzt werden. Die abtragende Schwingbewegung des Bohrkopfes beispielsweise mit flacher Stirnfläche wird durch die abrasiven Bohrhilfsmittel wie Diamantstaub oder dgl. wirkungsvoll unterstützt. Die Bohrflüssigkeit führt dabei das ausgebohrte Material unter Vermeidung von Staubentwicklung ab.

Die Absaugeinrichtung bzw. die Zuführeinrichtung umfaßt zweckmäßig einen Sammler, der mit einem im Bohrwerkzeug angeordneten Saug-/Spülkanal verbunden ist. Die Verbindung des Sammlers mit dem Saug-/Spülkanal im Bohrwerkzeug erlaubt eine universelle Einsetzbarkeit. Beispielsweise kann Luft durch den Sammler und den Saug-/Spülkanal angesaugt werden, wobei das im Bereich des Bohrkopfes abgetragene Bohrmehl unter Vermeidung von Staubentwicklung direkt am Abtragungsort abgesaugt wird. Die gleiche Anordnung kann auch in umgekehrter Richtung durchströmt sein. Bei der Durchströmung mit Luft kann das Bohrmehl wirkungsvoll aus dem Bohrloch ausgeblasen werden. Ebenso kann eine Bohrflüssigkeit beispielsweise in Form von Wasser mit Diamantstaub durch den Sammler und den Saug-/Spülkanal zum Bohrkopf gepumpt werden. Es ist eine gezielte Dosierung möglich.

Das Bohrwerkzeug mit einem Schaft und einem Bohrkopf zur Verwendung in dem vorgenannten Elektrowerkzeug ist vorteilhaft derart ausgebildet, daß der Bohrkopf eine unrunde, prismatische Form aufweist. Allein durch die angeregte Resonanzschwingung ohne eine unterstützende Drehbewegung können Bohrungen in beliebiger Querschnittsform präzise hergestellt werden, wobei die Querschnittsform der Bohrung allein durch die Querschnittskontur des Bohrkopfes vorgegeben ist. Die Querschnittskontur des Bohrkopfes kann beliebig ausgestaltet sein, in dessen Folge die Herstellung von Bohrungen mit nahezu beliebiger Querschnittsform nach Wunsch des Anwenders möglich ist.

Der Bohrkopf ist zweckmäßig mit einer Querschnittskontur in Form eines Polygons und insbesondere in Form eines Dreiecks ausgebildet, wobei das Polygon vorteilhaft gerundete Ecken aufweist. Es können in einfacher Weise prismatische Bohrungen mit polygonaler Querschnittsform hergestellt werden, wobei die Ecken des Polygons bei einer Drehung des im Elektrowerkzeug eingespannten Bohrwerkzeuges einfach und wirkungsvoll eine gegebenenfalls erwünschte Hinterschneidung erzeugen. Die gerundete Ausführung der Ecken vermeidet ein Ausbrechen der Bohrungskanten sowie eine mechanische Überlastung des Bohrwerkzeuges und trägt damit zur Konturgenauigkeit der auszuführenden Bohrung bei. Die dreieckige Ausführung erlaubt die Ausführung von ausgeprägten Hinterschneidungen bei gleichzeitig guter Zentrierung während des Bohrvorganges.

In einer zweckmäßigen Ausbildung ragt die Querschnittskontur des Bohrkopfes zumindest teilweise über eine Querschnittskontur des Schaftes in radialer Richtung hinaus. Es ist dadurch sichergestellt, daß die Energie der Resonanzschwingung des Bohrwerkzeuges am Bohrkopf auf das zu bohrende Material auch beim Ausführen von Hinterschneidungen übertragen wird.

Die Querschnittskontur des Schaftes liegt dabei vorteilhaft vollständig innerhalb der Querschnittskontur des Bohrkopfes und grenzt insbesondere an die Querschnittskontur des Bohrkopfes an. Nach dem Eindringen des Bohrkopfes in das zu bohrende Material ist ein Klemmen des Schaftes in der Bohrung vermieden. Ein zumindest näherungsweise freies Schwingverhalten des Schaftes ist beibehalten ohne eine übermäßige Veränderung der Eigenschwingungsfrequenz. Die in Resonanz stehende Abstimmung von Bohrwerkzeug und Schwingungserreger bleibt unabhängig von der erreichten Bohrtiefe erhalten. Die eingestellte und erwünschte Abtragungswirkung wird nicht beeinträchtigt. Bei einer Ausführung, bei der die Querschnittskontur des Schaftes an die Querschnittskontur des Bohrkopfes angrenzt, übernimmt der Schaft eine Führungsfunktion, die eine geradlinige Ausführung der Bohrung auch bei größeren Bohrtiefen sicherstellt. Durch die abweichende Querschnittsform des Bohrkopfes liegt der beispielsweise mit kreisrundem Querschnitt ausgeführte Schaft nur punkt- bzw. linienförmig in der unrunden Bohrung an. Die geringe Anlagefläche reicht für eine präzise Führung während des Bohrvorganges aus, während das Schwingungsverhalten im wesentlichen unbeeinträchtigt bleibt.

Für eine verbesserte Luftzu- bzw. -abfuhr ist der Schaft zweckmäßig zylindrisch oder konisch mit einem kreisförmigen Querschnitt ausgebildet, wobei in dem Zwischenraum zwischen der unrunden Bohrungsform und dem Kreisquerschnitt des Schaftes ein Luftkanal gebildet ist.

Das vorgenannte Elektrowerkzeug insbesondere in Verbindung mit dem vorgenannten Bohrwerkzeug erlaubt die Ausführung von Bohrungen in Stein oder steinähnlichen Werkstoffen wie Beton oder Mauerwerk oder dgl. mit präziser und universeller Formgebung. Es können insbesondere unrunde Bohrungen mit Hinterschneidung und hoher Formgenauigkeit hergestellt werden, die beispielsweise zur klemmenden und formschlüssigen Festlegung von Spreizdübeln geeignet sind.

Ein Ausführungsbeispiel der Erfindung ist im folgenden anhand der Zeichnung näher beschrieben. Es zeigen:
- Fig. 1: in einer schematischen Schnittdarstellung ein Betonbauteil mit einer Bohrung und einem eingesetzten Dübel nach dem Stand der Technik;
- Fig. 2: in einer schematischen Perspektivdarstellung ein handgeführtes Elektrowerkzeug mit einem Piezoerreger und einem drehfest eingespannten Bohrwerkzeug mit einem dreieckigen Bohrkopf;
- Fig. 3: in einer schematischen Draufsicht ein Bauteil mit einer dreieckig ausgeführten Bohrung;
- Fig. 4: eine schematische Schnittdarstellung des Bauteils nach Fig. 3 mit Einzelheiten zur Hinterschneidung der Bohrung.

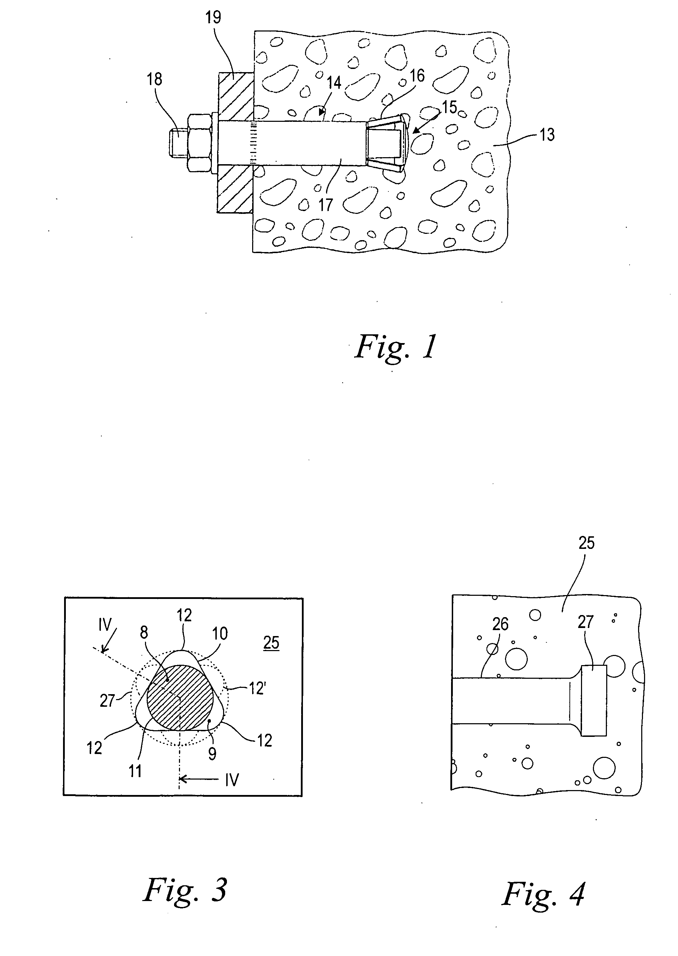

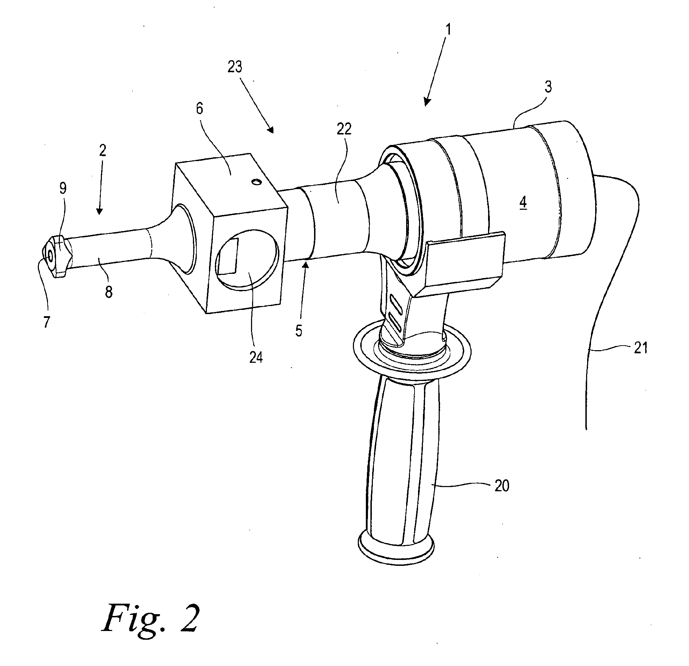

Fig. 1 zeigt eine schematische Schnittdarstellung eines Betonbauteiles 13 mit einem gebohrten Loch 14 nach dem Stand der Technik. Das Loch 14 ist mit einem drehenden zylindrischen Hammerbohrer gebohrt. Nach Ausführung einer zylindrischen Kernbohrung ist das Loch 14 durch eine kreisende Schwenkbewegung des Bohrers mit einem etwa kegelförmig aufgeweiteten Ende 15 versehen worden. Das aufgeweitete Ende 15 bildet eine Hinterschneidung 16, in dem ein aufgeweitetes Ende eines Spreizdübels 17 formschlüssig und klemmend gehalten ist. Der Dübel 17 nimmt eine Schraube 18 auf, an der ein angedeutetes Werkstück 19 gehalten ist.

Fig. 2 zeigt in einer perspektivischen Übersichtsdarstellung ein Elektrowerkzeug 1 mit einem Schwingungserreger 3, einem sogenannten Booster 22, einem Handgriff 20 und einem Anschlußkabel 21. An einem werkzeugseitigen Ende 23 des Elektrowerkzeuges 1 ist eine Spannvorrichtung 5 vorgesehen, in der ein Bohrwerkzeug 2 statisch fest und insbesondere bezogen auf das Elektrowerkzeug 1 drehfest eingespannt ist. Der Handgriff 20 ist im gezeigten Ausführungsbeispiel am Schwingungserreger 3 befestigt, kann aber auch beispielsweise am Booster 22 oder sogar am Bohrwerkzeug 2 festgelegt sein.

Der Schwingungserreger 3 ist im gezeigten Ausführungsbeispiel als Piezoerreger 4 ausgeführt, der über das Anschlußkabel 21 von einem nicht dargestellten elektrischen Schwingungsgenerator mit elektrischer Energie versorgt ist. Es kann dafür ein Netz- oder auch ein Akkubetrieb vorgesehen sein. Die von dem Piezoerreger 4 durch elektrische Anregung erzeugten mechanischen Schwingungen werden mittels des sogenannten Boosters 22 in ihrer Amplitude verstärkt und auf das in der Spannvorrichtung 5 eingespannte Bohrwerkzeug 2 übertragen.

Die Erregerfrequenzen des Piezoerregers 4 liegen im gezeigten Ausführungsbeispiel im Ultraschallbereich und damit oberhalb von 10 kHz. Das einseitig fest eingespannte Bohrwerkzeug 2 ist in seinen Eigenschwingungsfrequenzen so ausgelegt, daß es zumindest mit einem Eigenmode in Resonanz zur Erregerfrequenz des Piezoerregers 4 steht. Die geometrische Ausbildung des Bohrwerkzeuges 2 ist dabei vorteilhaft so gewählt, daß mehrere Eigenmoden in ihrer Frequenz nahe beieinander liegen, wobei der entsprechend abgestimmte Piezoerreger 4 eine Resonanzerregung der verschiedenen Eigenmoden bewirkt. Es kommen dabei Longitudinal-, Transversal- und Torsionsschwingungen in Betracht. Ein an einem Schaft 8 des Bohrwerkzeuges 2 angeordneter Bohrkopf 9 kann über die entsprechenden Schwingungen bei einer auszuführenden Bohrung Material in axialer, in radialer und in Umfangsrichtung abtragen.

Am geräteseitigen Ende des Bohrwerkzeuges 2 ist ein Sammler 6 vorgesehen, dessen Innenraum in strömungsleitender Verbindung mit einem innenseitig durch das Bohrwerkzeug 2 koaxial verlaufenden Saug-/Spülkanal 7 in Verbindung steht. Der Saug-/Spülkanal 7 kann auch als außenseitige Nut im Bohrwerkzeug 2 angeordnet sein. Der Sammler 6 weist eine seitliche Anschlußöffnung 40 auf, über die Bohrstaub von der stirnseitigen Mündung des Saug-/Spülkanales 7 aus dem Bereich des Bohrkopfes 9 abgesaugt werden kann. Es kann auch umgekehrt Luft durch die Anschlußöffnung 24 und den Saug-/Spülkanal 7 in die auszuführende Bohrung eingeblasen werden. Ebenso kann eine Bohrflüssigkeit beispielsweise in Form von Wasser mit einem abrasiven Bohrhilfsmittel wie Diamantstaub oder dgl. durch die Anschlußöffnung 24 und den Saug-/Spülkanal 7 in die Bohrung direkt in den Bereich des Bohrkopfes 9 eingeleitet werden.

Der Bohrkopf 9 weist eine unrunde prismatische Form auf, dessen Querschnittskontur in Form eines Dreiecks mit gerundeten Ecken 12 (Fig. 3) ausgebildet ist. Anstelle der gezeigten dreieckigen Form kann auch eine abweichende polygonale Form mit zwei oder mehr Ecken vorteilhaft sein. Ebenso können runde, ovale, elliptische, sternförmige oder andere Querschnittsformen zweckmäßig sein. Der Schaft 8 des Bohrwerkzeuges 2 ist im gezeigten Ausführungsbeispiel zylindrisch mit einem kreisförmigen Querschnitt, kann aber auch konisch ausgeführt sein.

Fig. 3 zeigt in einer schematischen Draufsicht ein Bauteil 25, beispielhaft aus Gasbeton. Es kann auch ein Naturstein, Beton, Mauerwerk oder dgl. sowie auch ein Holzwerkstoff, Metall oder ein Kunststoff in Frage kommen. Der Schaft 8 des Bohrwerkzeuges 2 (Fig. 2) weist eine kreisrunde Querschnittskontur 11 auf, die innenseitig an die dreieckige Querschnittskontur 10 des Bohrkopfes 9 angrenzt. Die Querschnittskontur 10 des Bohrkopfes 9 ragt dabei im Bereich der gerundet ausgeführten Ecken 12 radial über die Querschnittskontur 11 des Schaftes 8 hinaus. Zum Ausführen einer Bohrung 26 nach Fig. 4 wird das in Resonanz schwingende Bohrwerkzeug 2 (Fig. 2) in axialer Richtung gegen das Bauteil 25 geführt, wobei durch die abrasive Wirkung des schwingenden Bohrkopfes 9 die Bohrung 26 (Fig. 4) entsteht, deren Querschnittsform der Querschnittskontur 10 des Bohrkopfes 9 entspricht. Im gezeigten Ausführungsbeispiel entsteht eine Bohrung 26 mit gerundet dreieckigem Querschnitt.

Nach Erreichen der gewünschten Bohrtiefe wird das Elektrowerkzeug 1 mit dem drehfest eingespannten Bohrwerkzeug 2 (Fig. 2) langsam um die Längsachse des Bohrwerkzeuges 2 gedreht, bis die Ecken 12 beispielsweise die gestrichelt dargestellte und mit 12' bezeichnete Position nach Fig. 3 erreicht haben. Durch weiteres Drehen des Elektrowerkzeuges 1 erzeugen die Ecken 12 durch Abtrag des Materials aus dem Bauteil 25 eine etwa kreisförmige Hinterschneidungskontur 27 gegenüber der dreieckigen Querschnittskontur 10 der Bohrung 26.

Fig. 4 zeigt eine schematische Schnittdarstellung des Bauteils 25 entlang der Linie IV-IV nach Fig. 3. Demnach ist im Bohrungsgrund der Bohrung 26 eine radial aufgeweitete Hinterschneidung 27 gebildet, in der beispielsweise ein Spreizdübel formschlüssig und klemmend festlegbar ist.

## Patentansprüche

1. Handgeführtes Elektrowerkzeug zur Aufnahme eines Bohrwerkzeuges (2), umfassend einen auf das Bohrwerkzeug (2) wirkenden Schwingungserreger (3), wobei das Bohrwerkzeug (2) in mindestens einer Eigenschwingungsfrequenz auf die Erregerfrequenz des Schwingungserregers (3) abgestimmt ist.

2. Elektrowerkzeug nach Anspruch 1,
**dadurch gekennzeichnet, daß** die Erregerfrequenz und die Eigenschwingungsfrequenz oberhalb von 10 kHz und insbesondere im Ultraschallbereich liegen.

3. Elektrowerkzeug nach Anspruch 1 oder 2,
**dadurch gekennzeichnet, daß** der Schwingungserreger (3) als Piezoerreger (4) ausgebildet ist.

4. Elektrowerkzeug nach einem der Ansprüche 1 bis 3,
**dadurch gekennzeichnet, daß** das Elektrowerkzeug (1) eine Spannvorrichtung (5) zur statisch festen und insbesondere drehfesten Einspannung des Bohrwerkzeuges (2) aufweist.

5. Elektrowerkzeug nach einem der Ansprüche 1 bis 4,
**dadurch gekennzeichnet, daß** im Bereich des Bohrwerkzeuges (2) eine Absaugeinrichtung für Bohrstaub vorgesehen ist.

6. Elektrowerkzeug nach einem der Ansprüche 1 bis 5,
**dadurch gekennzeichnet, daß** im Bereich des Bohrwerkzeuges (2) eine Zuführeinrichtung für eine insbesondere mit abrasiven Bohrhilfsmitteln versehene Bohrflüssigkeit vorgesehen ist.

7. Elektrowerkzeug nach Anspruch 5 oder 6,
**dadurch gekennzeichnet, daß** die Absaugeinrichtung bzw. die Zuführeinrichtung einen Sammler (6) umfaßt, der mit einem im Bohrwerkzeug (2) angeordneten Saug-/Spülkanal (7) verbunden ist.

8. Bohrwerkzeug zur Verwendung in einem Elektrowerkzeug nach einem der Ansprüche 1 bis 7, mit einem Schaft (8) und mit einem Bohrkopf (9),
**dadurch gekennzeichnet, daß** der Bohrkopf (9) eine unrunde, prismatische Form aufweist.

9. Bohrwerkzeug nach Anspruch 8,
**dadurch gekennzeichnet, daß** der Bohrkopf (9) mit einer Querschnittskontur (10) in Form eines Polygons und insbesondere in Form eines Dreiecks ausgebildet ist.

10. Bohrwerkzeug nach Anspruch 9,
**dadurch gekennzeichnet, daß** das Polygon gerundete Ecken (12) aufweist.

11. Bohrwerkzeug nach einem der Ansprüche 8 bis 10,
**dadurch gekennzeichnet, daß** die Querschnittskontur (10) des Bohrkopfes (9) zumindest teilweise über eine Querschnittskontur (11) des Schaftes (8) in radialer Richtung hinausragt.

12. Bohrwerkzeug nach Anspruch 11,
**dadurch gekennzeichnet, daß** die Querschnittskontur (11) des Schaftes (8) vollständig innerhalb der Querschnittskontur (10) des Bohrkopfes (9) liegt und insbesondere an die Querschnittskontur (10) des Bohrkopfes (9) angrenzt.

13. Bohrwerkzeug nach einem der Ansprüche 8 bis 12,
**dadurch gekennzeichnet, daß** der Schaft (8) zylindrisch oder konisch mit einem kreisförmigen Querschnitt ist.

14. Bohrwerkzeug nach einem der Ansprüche 8 bis 13,
**dadurch gekennzeichnet, daß** das Bohrwerkzeug (2) einen insbesondere innenseitig verlaufenden Saug-/Spülkanal (7) aufweist.

15. Verwendung eines Elektrowerkzeuges (1) nach einem der Ansprüche 1 bis 8 zum Bohren von Löchern in Stein oder steinähnlichen Werkstoffen wie Beton, Mauerwerk oder dergleichen.
